# EUROPÄISCHE PATENTANMELDUNG

(11) **EP 3 972 090 A1**
(43) Veröffentlichungstag der Anmeldung: **23.03.2022**
(21) Anmeldenummer: 21196953.0
(22) Anmeldetag: 15.09.2021
(51) Int. Cl.: H02K 3/02, H02K 3/04, H02K 55/00, H02K 55/02

(54) **ELEKTRISCHE MASCHINE**

(30) Priorität: 17.09.2020 LU 102069
(71) Anmelder: Oswald Elektromotoren Gmbh, 63897 Miltenberg (DE)
(72) Erfinder: Oswald, Johannes, 63897 Miltenberg (DE); Reis, Thomas, 63934 Kleinheubach (DE)
(74) Vertreter: Habermann Intellectual Property Partnerschaft von Patentanwälten mbB

(57) **Zusammenfassung**

Die Erfindung betrifft eine elektrische Maschine mit einem Stator und einem Rotor. Der Stator und/oder der Rotor weist eine Spulenanordnung (12) auf. Die Spulenanordnung (12) weist mehrere längs eines Umfangs der Spulenanordnung (12) angeordnete Spulen (2) auf. Die Spulen (2) weisen jeweils eine Wicklung (4) aus einem bandförmigen Supraleiter (1) auf. Eine Wickelkopfbreite (8) des Supraleiters (1) ist in Wickelkopfbereichen (7) der Wicklung (4) geringer als eine Wickellängsbreite (8) des Supraleiters (1) in Wickellängsbereichen (9) der Wicklung (4). Die Wickelkopfbreite (8) in den Wickelkopfbereichen (7) ist in Abhängigkeit eines im Betrieb der elektrischen Maschine zu erwartenden kritischen Belastungsstroms der Supraleiter (1) in dem Wickelkopfbereich (9) vorgegeben.

## Beschreibung

Die Erfindung betrifft eine elektrische Maschine mit einem Stator und einem Rotor, wobei der Stator und/oder der Rotor eine Spulenanordnung aufweisen, wobei die Spulenanordnung mehrere längs eines Umfangs der Spulenanordnung angeordnete Spulen aufweist, wobei die Spulen jeweils eine Wicklung aus einem bandförmigen Supraleiter aufweisen.

Derartige elektrische Maschinen, bei denen der Rotor relativ zu einem feststehenden Stator eine Drehbewegung ausführt, werden in unterschiedlichen Ausführungsformen in einer Vielzahl von Anwendungsgebieten sowohl als Motoren als auch als Generatoren eingesetzt. Beispielsweise ist es bekannt, derartige elektrische Maschinen mit Drehstrom zu betreiben und als Asynchron- oder Synchronmaschine auszuführen.

Aus dem Stand der Technik sind zudem elektrische Maschinen bekannt, bei denen die Wicklungen der Spulen des Stators und/oder des Rotors aus einem supraleitenden Material hergestellt sind und durch eine entsprechende Kühleinrichtung bis zu einer materialabhängigen Sprungtemperatur des supraleitenden Materials abgekühlt werden können. Durch die Verwendung supraleitender Materialien für die Wicklungen treten nur geringe Energieverluste bei dem Betrieb der supraleitenden elektrischen Maschine auf, so dass kleinere und leichtere elektrische Maschinen bei gleichbleibender Leistungsdichte hergestellt werden können. Eine derartige elektrische Maschine wird beispielsweise in der Druckschrift EP 2 786 472 B1 beschrieben.

Zur Herstellung der supraleitenden Wicklungen werden üblicherweise Hochtemperatur-Supraleiter und insbesondere YBCO-Bänder verwendet. YBCO-Bandleiter weisen eine besonders hohe Stromtragfähigkeit auf, arbeiten auch in starken Magnetfeldern und weisen vergleichsweise geringe Wechselstromverluste auf. Hochtemperatur-Supraleiter weisen eine vergleichsweise hohe Sprungtemperatur auf, so dass eine Kühlung mit flüssigem Stickstoff ausreichend ist, um die supraleitenden Eigenschaften der aus einem keramischen Material hergestellten Hochtemperatur-Supraleiter zu erreichen und aufrechtzuerhalten.

YBCO-Bandleiter bestehen üblicherweise aus einem dünnen Edelstahlband mit einer Breite von etwa 0,5 cm bis 1 cm, das als Träger für die nur etwa 1 µm dicke supraleitende Keramikschicht dient. Die supraleitende Keramikschicht kann mit Hilfe spezieller Verfahren auf dem Edelstahlband abgeschieden werden, wobei eine gleichmäßige Kristallstruktur hergestellt wird.

Als Aufgabe der Erfindung wird es angesehen, die aus dem Stand der Technik bekannten elektrischen Maschinen derart weiterzuentwickeln, dass die Leistungsdichte sowohl im Hinblick auf eine Masse sowie auf ein Volumen der elektrischen Maschine weiter erhöht werden kann.

Diese Aufgabe wird erfindungsgemäß dadurch gelöst, dass eine Wickelkopfbreite des Supraleiters in Wickelkopfbereichen der Wicklung geringer ist als eine Wickellängsbreite des Supraleiters in Wickellängsbereichen der Wicklung. Bei den bekannten elektrischen Maschinen sind die auf die Spulen wirkenden äußeren elektro-magnetischen Felder in den Bereichen von Wickelköpfen der Spulen erheblich geringer als in den zum Betrieb der elektrischen Maschine verwendeten Wickellängsbereichen. Daher treten in den Wickelkopfbereichen geringere Verlustleistungen in den Supraleitern auf, so dass die Supraleiter in den Wickelkopfbereichen mit einer größeren Stromdichte belastet werden können, als in den Wickellängsbereichen. Daher ist es möglich, in den Wickelkopfbereichen Supraleiter mit einer geringeren Breite und damit auch mit einer geringeren Querschnittsfläche einzusetzen als in den Wickellängsbereichen. Durch die Reduktion des in den Wickelkopfbereichen verwendeten Wicklungsmaterials kann sowohl das Gewicht als auch das Volumen der Spulen und damit der elektrischen Maschine weiter reduziert werden.

Durch die Verwendung der erfindungsgemäß in den Wickelkopfbereichen verjüngten Supraleiter können die Supraleiter in dem Wickelkopfbereich stärker gebogen werden, bevor eine Beschädigung des Supraleiters auftritt. Auf diese Weise kann das Volumen der Spulen verringert und die Volumenleistungsdichte der elektrischen Maschine erhöht werden.

Bei dem bandförmigen Supraleiter handelt es sich vorteilhafterweise um einen keramischen Hochtemperatursupraleiter und besonders vorteilhafterweise um einen Supraleiter aus YBCO.

Vorteilhafterweise ist erfindungsgemäß vorgesehen, dass die Wickelkopfbreite über den gesamten Wickelkopfbereich geringer ist als die Wickellängsbreite. Dadurch dass die Wickelkopfbreite in dem gesamten Wickelkopfbereich reduziert ist kann die Volumenleistungsdichte weiter erhöht werden.

Erfindungsgemäß ist vorgesehen, dass die Spulen jeweils einen Wicklungskörper aufweisen, wobei sich die Wickelkopfbereiche der Wicklung jeweils vollständig über eine Länge eines dem jeweiligen Wickelkopfbereich zugeordneten Wicklungskörperkopfs des Wicklungskörpers erstrecken. Bei dem Wicklungskörper handelt es sich um einen geeigneten Spulenkern wie beispielsweise einem Eisenkern. Die Volumenleistungsdichte kann hier besonders gut dadurch reduziert werden, dass die Wickelkopfbreite über die gesamte Länge des Wicklungskörperkopfs reduziert ist.

Um den Supraleiter in einem Übergang zwischen Wickellängsbereich und Wickelkopfbereich besonders gut biegen zu können, ist erfindungsgemäß vorgesehen, dass sich die Wickelkopfbereiche über die Länge des Wicklungskörperkopfs hinaus erstrecken.

Erfindungsgemäß ist vorteilhafterweise vorgesehen, dass die Wickelkopfbreite in den Wickelkopfbereichen in Abhängigkeit eines im Betrieb der elektrischen Maschine zu erwartenden kritischen Belastungsstrom der Supraleiter in dem Wickelkopfbereich vorgegeben ist. Die Wickelkopfbreite sollte dabei so gewählt werden, dass die supraleitenden Eigenschaften des Supraleiters in den Wickelkopfbereichen bei den zu erwartenden Stromdichten aufrechterhalten werden können und der kritische Belastungsstrom, bei der die Supraleitung in den Wickelkopfbereichen schlagartig zusammenbrechen könnte, nicht erreicht wird. Der kritische Belastungsstrom des Supraleiters hängt von den durch auf den Supraleiter wirkenden externen Felder sowie durch induzierte Wirbelströme verursachten Leitungsverlusten und von dem Leiterquerschnitt ab.

Vorteilhafterweise ist erfindungsgemäß vorgesehen, dass eine Verjüngung des Supraleiters in dem Wickelkopfbereich von der Wickellängsbreite zu der Wickelkopfbreite von einer Seite des bandförmigen Supraleiters her ausgeführt ist. Eine gegenüberliegende Seite des Supraleiters weist dabei einen durchgehenden, geraden Verlauf auf.

Es ist aber auch möglich und erfindungsgemäß vorgesehen, dass die Verjüngung des Supraleiters in dem Wickelkopfbereich von der Wickellängsbreite zu der Wickelkopfbreite von zwei einander gegenüberliegenden Seiten des bandförmigen Supraleiters her ausgeführt ist. Bei dieser Ausgestaltung laufen die einander gegenüberliegenden Seiten bei dem Übergang von der Wickellängsbreite zu der Wickelkopfbreite von beiden Seiten her in Richtung auf eine Längsachse des Supraleiters hin aufeinander zu.

Bei einer besonders vorteilhaften Ausgestaltung der erfindungsgemäßen elektrischen Maschine ist vorgesehen, dass die Wicklungen jeweils als verteilte Wicklung ausgeführt sind, so dass sich Wicklungsabschnitte der Wicklungen benachbart angeordneter Spulen in den Wicklungskopfbereichen der jeweiligen Spulen kreuzen. Bei der Verwendung verteilter Wicklungen bietet die erfindungsgemäße Ausgestaltung der Supraleiter mit reduzierter Wicklungskopfbreite besondere Vorteile, da auf diese Weise die Kreuzungen der Phasen benachbarter Spulen in den Wickelkopfbereichen einfacher hergestellt werden können. Erfindungsgemäß ist vorgesehen, dass der bandförmige Supraleiter in dem Wickelkopfbereich ausschließlich von einer Seite her verjüngt ist, so dass die gegenüberliegende Seite einen durchgehenden Verlauf aufweist. Auf diese Weise können die Supraleiter benachbarter Wicklungen derart angeordnet werden, dass die verjüngten Supraleiterabschnitte in den Wickelkopfbereichen ineinander eingreifen. Besonders vorteilhafterweise ist vorgesehen, dass die Wickelkopfbreite höchstens 50 % der Wickellängsbreite beträgt. Auf diese Weise können die Wickelkopfbereiche bei verteilten Wicklungen besonders platzsparend ausgeführt werden.

Vorteilhafterweise ist erfindungsgemäß vorgesehen, dass ein Spulenquerschnitt oval oder rechteckförmig ist. Auf diese Weise verlaufen die Wicklungen in den Wickellängsbereichen einer Spule weitestgehend parallel zueinander und in den Wickelkopfbereichen im Wesentlichen senkrecht zu einer Drehachse des Rotors der elektrischen Maschine, so dass die Wirkung der externen Felder in den Wickelkopfbereichen weiter reduziert werden kann.

In vorteilhafter Weise ist erfindungsgemäß vorgesehen, dass sich die Wickelkopfbreite in einem Übergangsbereich zwischen dem Wickellängsbereich zu dem Wickelkopfbereich kontinuierlich verjüngt. Es ist aber auch möglich und erfindungsgemäß vorgesehen, dass sich die Wickelkopfbreite in dem Übergangsbereich stufenweise verjüngt, wobei auch lediglich eine Stufe vorgesehen sein kann.

Vorteilhafterweise ist erfindungsgemäß vorgesehen, dass die Wickelkopfbreite oder ein Verlauf der Wickelkopfbreite in dem Übergangsbereich in Abhängigkeit eines im Betrieb der elektrischen Maschine zu erwartenden kritischen Belastungsstroms der Supraleiter in dem Übergangsbereich oder im Verlauf des Übergangsbereichs vorgegeben ist. Auf diese Weise wird der Zusammenbruch der Supraleitung im Betrieb der elektrischen Maschine vermieden.

Um den Einfluss externer Felder in den Wickelkopfbereichen weiter zu reduzieren, ist erfindungsgemäß vorgesehen, dass die Supraleiter in den Wickelkopfbereichen nicht parallel zu einer Drehachse des Rotors der elektrischen Maschine verlaufen.

Vorteilhafterweise ist erfindungsgemäß vorgesehen, dass mindestens eine Wicklung mehrere Windungen aufweist und/oder mehrere parallel zueinander verlaufend ausgerichtete bandförmige Supraleiter aufweist. Üblicherweise werden Wicklungen mit mehreren Windungen ausgeführt, wobei der bandförmige Supraleiter mehrfach um einen Spulenkörper geführt wird. Häufig ist es zudem vorteilhaft, mehrere Supraleiter parallel zueinander ausgerichtet um den Spulenkörper herum zu wickeln.

Um eine ausreichende Kühlung der Supraleiter der elektrischen Maschine zu erreichen, ist erfindungsgemäß vorgesehen, dass die elektrische Maschine eine Kühleinrichtung aufweist, wobei die Kühleinrichtung mit dem Supraleiter in Wirkverbindung steht und dazu geeignet ist, die Supraleiter bis zu einer Sprungtemperatur abzukühlen. Die Kühleinrichtung kann erfindungsgemäß beispielsweise auch eine Vakuumkammer aufweisen, innerhalb der die Supraleiter angeordnet sind und die als thermischer Isolator der abgekühlten Supraleiter gegenüber der Umgebung dienen.

Weitere vorteilhafte Ausgestaltungen der erfindungsgemäßen elektrischen Maschine werden anhand von der in der Zeichnung näher dargestellten Ausführungsbeispielen näher erläutert.
Figur 1 eine schematisch, ausschnittsweise dargestellte Ansicht eines erfindungsgemäßen bandförmigen Supraleiters,
Figur 2 eine schematisch dargestellte Spule mit dem in Figur 1 dargestellten Supraleiter,
Figur 3 eine schematisch, ausschnittsweise dargestellte Ansicht eines bandförmigen Supraleiters, wobei eine Verjüngung in Wickelkopfbereichen jeweils von einer Seite des bandförmigen Supraleiters her ausgeführt ist und
Fig. 4 eine schematisch, ausschnittsweise dargestellte Ansicht benachbart zueinander angeordneter Spulen mit einer verteilten Wicklung unter Verwendung von in Figur 3 dargestellten bandförmigen Supraleitern.

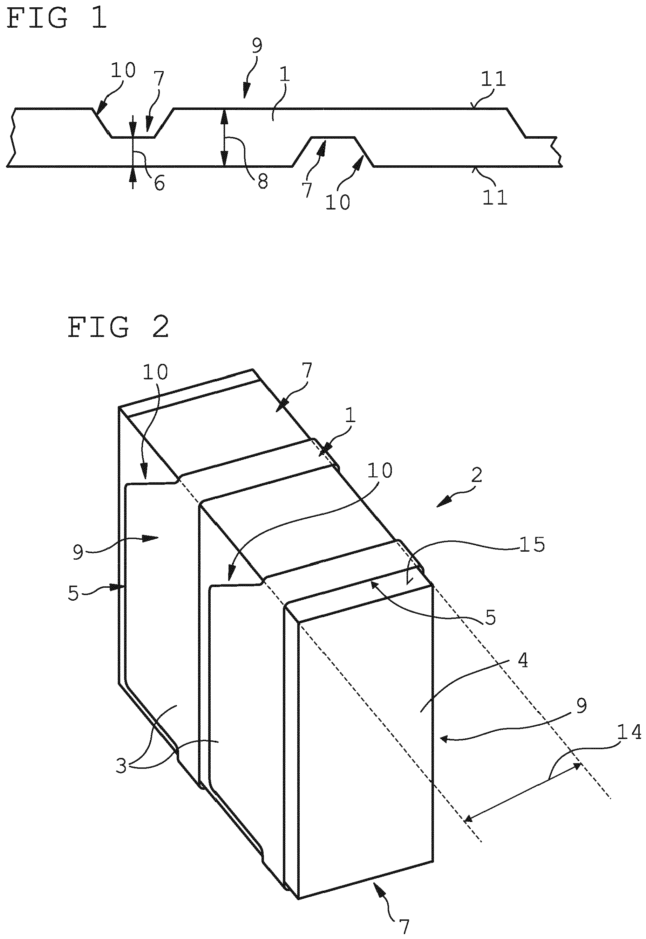

In Figur 1 ist schematisch ausschnittsweise ein bandförmiger Supraleiter 1 dargestellt. Figur 2 zeigt eine schematische Darstellung einer Spule 2 mit einer Wicklung 3, die aus dem in Figur 1 dargestellten Supraleiter hergestellt ist und um einen Wicklungskörper 4 herum gewickelt ist. In der Figur 2 sind exemplarisch zwei Windungen 5 der Wicklung 3 dargestellt.

Eine Wickelkopfbreite 6 des Supraleiters 1 ist in Wickelkopfbereichen 7 der Wicklung 3 geringer ist als eine Wickellängsbreite 8 des Supraleiters 1 in Wickellängsbereichen 9 der Wicklung 3, wobei die Wickelkopfbreite 6 über den gesamten Wickelkopfbereich 7 geringer ist als die Wickellängsbreite 8. Ein Spulenquerschnitt der Spule 2 ist im Wesentlichen rechteckig. Die Wickelkopfbreite 7 verjüngt sich in einem Übergangsbereich 10 zwischen dem Wickellängsbereich 9 zu dem Wickelkopfbereichen 7 kontinuierlich. Der Supraleiter 1 verjüngt sich in den Wickelkopfbereichen 7 jeweils ausschließlich von einer Seite 11 des Supraleiters 2 her, so dass die gegenüberliegende Seite 11 in dem jeweiligen Wickelkopfbereich 7 einen durchgehenden Verlauf aufweist. Die Wickelkopfbereiche 7 der Wicklung 3 erstrecken sich vollständig über eine Länge 14 eines dem jeweiligen Wickelkopfbereich 7 zugeordneten Wicklungskörperkopfs 15 des Wicklungskörpers 4 hinaus.

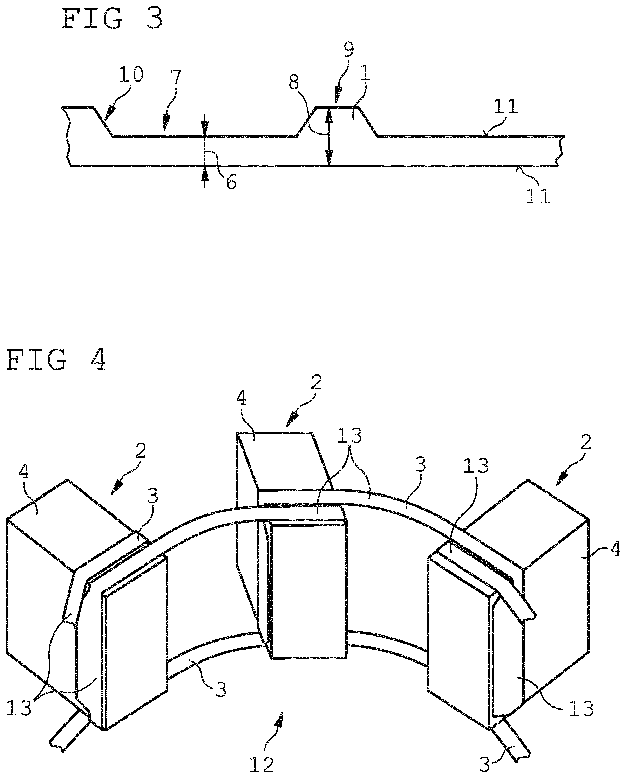

Bei dem in Figur 3 schematisch dargestellten Supraleiter 1 verjüngt sich der Supraleiters 1 in den Wickelkopfbereichen 7 über den gesamten Verlauf ausschließlich von einer Seite 11 des Supraleiters 1 her. Der in Figur 3 dargestellte Supraleiter 1 eignet sich besonders zur Herstellung einer wie in Figur 4 schematisch dargestellten Spulenanordnung 12 mit verteilten Wicklung 13 bei der sich Wicklungsabschnitte 14 der Wicklungen 3 benachbart angeordneter Spulen 2 in den Wickelkopfbereichen 7 der jeweiligen Spulen 2 kreuzen. In der Figur 4 sind exemplarisch jeweils zwei Windungen 5 der Wicklungen 3 dargestellt.

## Patentansprüche

1. Elektrische Maschine mit einem Stator und einem Rotor, wobei der Stator und/oder der Rotor eine Spulenanordnung (12) aufweisen, wobei die Spulenanordnung (12) mehrere längs eines Umfangs der Spulenanordnung (12) angeordnete Spulen (2) aufweist, wobei die Spulen (2) jeweils eine Wicklung (3) aus einem bandförmigen Supraleiter (1) aufweisen, **dadurch gekennzeichnet, dass** eine Wickelkopfbreite (6) des Supraleiters (1) in Wickelkopfbereichen (7) der Wicklung (3) geringer ist als eine Wickellängsbreite (8) des Supraleiters (1) in Wickellängsbereichen (9) der Wicklung (3).

2. Elektrische Maschinen gemäß Anspruch 1, **dadurch gekennzeichnet, dass** die Wickelkopfbreite (6) über den gesamten Wickelkopfbereich (7) geringer ist als die Wickellängsbreite (8).

3. Elektrische Maschine gemäß Anspruch 1 oder Anspruch 2, **dadurch gekennzeichnet, dass** die Spulen (2) jeweils einen Wicklungskörper (4) aufweisen, wobei sich die Wickelkopfbereiche (7) der Wicklung (3) jeweils vollständig über eine Länge (14) eines dem jeweiligen Wickelkopfbereich (7) zugeordneten Wicklungskörperkopfs (15) des Wicklungskörpers (4) erstrecken.

4. Elektrische Maschine gemäß Anspruch 3, **dadurch gekennzeichnet, dass** sich die Wickelkopfbereiche (7) über die Länge (14) des Wicklungskörperkopfs (15) hinaus erstrecken.

5. Elektrische Maschine gemäß einem der voranstehenden Ansprüche, **dadurch gekennzeichnet, dass** die Wickelkopfbreite (6) in den Wickelkopfbereichen (7) in Abhängigkeit eines im Betrieb der elektrischen Maschine zu erwartenden kritischen Belastungsstroms der Supraleiter (1) in dem Wickelkopfbereich (7) vorgegeben ist.

6. Elektrische Maschine gemäß einem der voranstehenden Ansprüche, **dadurch gekennzeichnet, dass** eine Verjüngung des Supraleiters (1) in dem Wickelkopfbereich (7) von der Wickellängsbreite (8) zu der Wickelkopfbreite (6) von einer Seite (11) des bandförmigen Supraleiters (1) her ausgeführt ist.

7. Elektrische Maschine gemäß einem der Ansprüche 1 bis 5, **dadurch gekennzeichnet, dass** die Verjüngung des Supraleiters (1) in dem Wickelkopfbereich (7) von der Wickellängsbreite (8) zu der Wickelkopfbreite (6) von zwei einander gegenüberliegenden Seiten (11) des bandförmigen Supraleiters (1) her ausgeführt ist.

8. Elektrische Maschine gemäß einem der voranstehenden Ansprüche, **dadurch gekennzeichnet, dass** die Wicklungen (3) jeweils als verteilte Wicklung (13) ausgeführt sind, sodass sich Wicklungsabschnitte (14) der Wicklungen (3) benachbart angeordneter Spulen (2) in den Wicklungskopfbereichen (7) der jeweiligen Spulen (2) kreuzen.

9. Elektrische Maschine gemäß einem der voranstehenden Ansprüche, **dadurch gekennzeichnet, dass** ein Spulenquerschnitt oval oder rechteckförmig ist.

10. Elektrische Maschine gemäß einem der voranstehenden Ansprüche, **dadurch gekennzeichnet, dass** sich die Wickelkopfbreite (8) in einem Übergangsbereich (10) zwischen dem Wickellängsbereich (9) zu dem Wickelkopfbereich (7) kontinuierlich verjüngt.

11. Elektrische Maschine gemäß einem der voranstehenden Ansprüche, **dadurch gekennzeichnet, dass** die Wickelkopfbreite (8) oder ein Verlauf der Wickelkopfbreite (8) in dem Übergangsbereich (10) in Abhängigkeit eines im Betrieb der elektrischen Maschine zu erwartenden kritischen Belastungsstroms der Supraleiter (1) in dem Übergangsbereich (10) oder im Verlauf des Übergangsbereichs (10) vorgegeben ist.

12. Elektrische Maschine gemäß einem der voranstehenden Ansprüche, **dadurch gekennzeichnet, dass** die Supraleiter (1) in den Wickelkopfbereichen (7) nicht parallel zu einer Drehachse des Rotors der elektrischen Maschine verlaufen.

13. Elektrische Maschine gemäß einem der voranstehenden Ansprüchen, **dadurch gekennzeichnet, dass** mindestens eine Wicklung (3) mehrere Windungen aufweist und/oder mehrere parallel zueinander verlaufend ausgerichtete bandförmige Supraleiter (1) aufweist.

14. Elektrische Maschine gemäß einem der voranstehenden Ansprüche, **dadurch gekennzeichnet, dass** die elektrische Maschine eine Kühleinrichtung aufweist, wobei die Kühleinrichtung mit den Supraleitern (1) in Wirkverbindung steht und dazu geeignet ist, die Supraleiter (1) bis zu einer Sprungtemperatur abzukühlen.
